Europäisches Patentamt

(19) European Patent Office

Office européen des brevets

(11) **EP 0 858 971 A2**

(12) **EUROPEAN PATENT APPLICATION**

(43) Date of publication:
19.08.1998 Bulletin 1998/34

(51) Int. Cl.$^6$: **C02F 1/78**

(21) Application number: 98101834.4

(22) Date of filing: 03.02.1998

(84) Designated Contracting States:
AT BE CH DE DK ES FI FR GB GR IE IT LI LU MC NL PT SE
Designated Extension States:
AL LT LV MK RO SI

(30) Priority: 14.02.1997 JP 30062/97

(71) Applicant: **Hitachi, Ltd.**
**Chiyoda-ku, Tokyo 101-0062 (JP)**

(72) Inventors:
• **Yamashita, Masayuki**
**Hitachi-shi, Ibaraki 316 (JP)**

• **Goto, Takashi**
**Hitachi-shi, Ibaraki 316 (JP)**
• **Shiono, Shigeo**
**Hitachi-shi, Ibaraki 316 (JP)**
• **Nakazawa, Masamitsu**
**Hitachi-shi, Ibaraki 316 (JP)**
• **Komatsu, Naoto**
**Hitachi-shi, Ibaraki 316 (JP)**

(74) Representative:
**Strehl Schübel-Hopf & Partner**
**Maximilianstrasse 54**
**80538 München (DE)**

(54) **Water treatment by ozonisation under pressure**

(57) In an ozone reactor of a conventional drinking water treatment apparatus, since the optimum discharge pressure of an ozone generator is used, it required long time for purifying processing water with ozone gas.

In the invention, ozone gas in an ozone generator 1 is stored in an ozone gas compressor 5 and thereafter compressed, injected into an ozone reactor 6, and immediately pressurised by a processing water pressu-riser 8, thus quickly promoting oxidation by ozone.

As a result, since processing water and ozone in the ozone reactor are pressurised, the oxidation rate increases, the time for purifying the processing water can be shortened as compared with an arrangement without processing water pressuriser, and the ozone reactor can be miniaturised.

FIG. 1

**Description**

BACKGROUND OF THE INVENTION

Various measures that water treatment (removal of dust substances to a certain extent) is carried out in sewage processing facilities; or waste water treatment is carried out in production facilities have been taken for the prevention of mixing ill-odored substances or trihalomethane (a carcinogen) caused by contamination of rivers into drinking water at drinking water treatment facilities; or for the prevention of river contamination contaminants in river water caused by sewage from human life.

Japanese Patent Application Laid-Open No. 55-34160 Publication discloses a water treatment apparatus by ozonation, in which by mixing of ozone and air, oxidization is effected in a gas/liquid contact tower for water to be processed to make effective processing. Japanese Patent Application Laid-Open No. 63-93396 Publication discloses a waste treatment apparatus in which waste water is subjected to oxidize in a container by pouring ozone, and to be filtered by a hollow film filter for unharmful water.

In the conventional treatment method, in case of a pond type ozone reactor, the depth is 5 to 6 m (corresponding to 0.5 to 0.6 $kg/cm^2 \cdot G$ at bottom), and the ozone reaction time is about 10 min. In case of a tank type, the optimum blowing pressure of an ozone generator is 0.7 to 1.0 $kg/cm^2 \cdot G$. Therefore, in both type reactors, ozonation having ozone gas of about 1 $kg/cm^2 \cdot G$ mixed with processing water is carried out. Accordingly, the expense for constructing the ozone reactor is as high as 3 to 4 times of expense for the apparatus.

On the other hand, since the solution reaction law of ozone gas into processing water is in accordance with Henry law (pressure = Henry constant × ozone concentration ) in the liquid, the higher the pressure, the quicker solution reaction to processing water is carried out. Therefore, a method capable of performing pressurized ozone oxidization inexpensively has been desired. Further, about a hollow film filter, a pore size has been determined physically, so a filtration quantity increases in accordance with input pressure. Therefore, a pump for increasing pressure is separately required, which leads to the increase of the cost.

SUMMARY OF THE INVENTION

An object of the present invention is to provide a pressurizing type ozone water treatment apparatus and the method which can realize the miniaturization of the apparatus and the reducing the total cost based on the increasing pressure of a tank shaped ozone reactor for promoting oxidization, and providing filters on the discharge side to increase the quantity of filtration water for increasing the quantity of purifying treatment.

In the pressurizing type ozone water treatment apparatus and the method, ozone is injected into an ozone reactor by an ozone gas compressor using the optimum discharge pressure of an ozone generator, and pressurized by a processing water compressor to promote oxidization, and filter units are provided on the discharge side to obtain clean water.

According to the embodiments of the present invention, the following effects are obtained.

(1) The generation of ozone gas is produced by the optimum pressure of the conventional ozone generator, the ozone gas is compressed and poured into the ozone reactor, after which the processing water pressure is increased.

Therefore, the oxidization is promoted quickly by the Henry law to quickly decompose harmful substances contained in the processing water. Thereby, the ozone reactor can be miniaturized and manufactured at less cost. When the harmful substances are physically removed by the filter units, they can be filtrated efficiently since the inlet pressure of the filtration film is high, and the purifying processing can achieved with high accuracy. This eliminates the civil engineering works such as excavation, providing a small and inexpensive apparatus as a whole.

(2) The various quality of treated water after removal of harmful substances in processing water, that is, in clear water quality can be obtained simultaneously by a combination of kinds of filters (for example, MF filter, UF filter and NF filter). Therefore, processing water can be obtained by the same process apparatus, thus achieving the clear water processing apparatus of various functions.

(3) Pressurizing process of both ozone gas and processing water, the ozone reaction time, and the filtration time can be subjected to sequence control by a single control portion, so the operating manipulation is simple, and the quantity of filtration water per time increases.

(4) An ozone reactor can be divided into a plurality of sections, and pressurization toward the filter units through a reducing valve can be made. Therefore, the purifying time can be shortened and the quantity of filtration water can be increased, which leads to reductio the total cost.

(5) According to the present invention, Connecting the compressor for compressing ozone gas, the drain, the processing water vessel for storing processing water, and the device for pressurizing ozone gas, to a plurality of connecting holes provided below and above the ozone reactor can make the ozone water processing apparatus immediately.

Therefore, as compared with the conventional ozone water treatment apparatus, civil engineering architectural works are eliminated to provide a small and inexpensive apparatus as a whole.

In the present invention, the drive valve 8a of the processing water pressurizer 8 is moved from left to right to raise the internal pressure $P_2$ of the ozone reaction vessel 6 and maintain this state for time $T_3$. Therefore, it is possible to shorten the time for making processing water into clean water, for example, about 10 without use of a processing water pressurizer, to 3, realizing the miniaturization of the ozone reaction vessel 6 and the enhancement of the production quantity of clean water.

BRIEF DESCRIPTION OF THE DRAWINGS

Fig. 1 is an explanatory view showing the entire constitution of an ozone water processing apparatus according to one embodiment of the present invention.
Fig. 2 is a time chart explanatory view of a control method of a control portion in Fig. 1.
Fig. 3 is an explanatory view of the control method of the control portion in Figs. 1 and 2.
Fig. 4 is an explanatory view of a further embodiment having a plurality of ozone reaction vessels.
Fig. 5 is a time chart explanatory view of a control method of a control portion in Fig. 4.

DESCRIPTION OF THE PREFERRED EMBODIMENTS

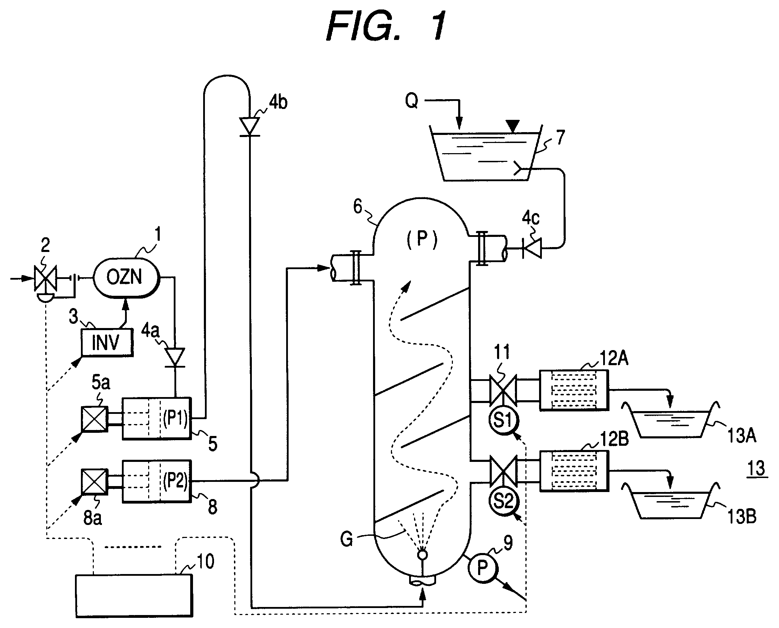

The pressurizing type ozone water treatment apparatus and the method will be explained with reference to Figs. 1 to 3. Fig. 1 is an explanatory view of the entire constitution of the present invention.

When a raw gas amount adjusting valve 2 is opened to supply a raw gas to an ozone generator 1 and an electrode within the ozone generator 1 is glow-discharged by an inverter board 3, the raw gas is formed into an ozone gas G. Discharge pressure is set to 0.7 to 1 kg/cm$^2$ · G from the ozone gas producing optimum efficiency, and the gas is filled in an ozone gas compressor 5 via a check valve 4a, then the raw gas amount adjusting valve 2 is closed so that the inverter board 3 stops and generation of ozone stops. That is, the glow-discharging is effected only during the operation of the raw gas amount adjusting valve 2 to generate ozone. When a drive valve 5a is stroked rightward in Fig. 1 to compress the ozone gas, the check valve 4a causes a closed check valve 4b to open to inject it into an ozone reaction vessel 6. At this time, processing water is already filled in the ozone reactor 6 through a check valve 4c from a processing water vessel 7. The reason is that since a water level of the processing water vessel is made higher than the top of the ozone reaction vessel 6, the processing water is filled therein due to gravity.

On the other hand, in a processing water pressurizer 8, when a drive valve 8a is stroked rightward in Fig. 1, water pressure within the ozone reactor 6 rises. The compressed volume resulting from the stroke of the drive valve 8a contributes to a pressure rise within the vessel due to the principle of Pascal, and when a pressure value in the vessel is determined, the compressed volume portion of the drive valve 8a is obtained and the dimension of the processing water compressor 8 is determined. Even if the water pressure in the ozone reactor 6 is elevated, the processing water does not backflow due to the presence of the check valves 4b and 4c. The water pressure is measured by a pressure gauge 9 and input into a control portion 10.

When ($S_1$) or ($S_2$) of an electric valve 11 is operated from "close" to "open", the processing water subjected to pressurized oxidization in the ozone reactor 6 is imparted to filter units 12A, 12B and discharged as filtrate to a purifying vessel 13. In Fig. 1, two kinds of the filter units 12A and 12B are provided. As the kind of filter, MF filter has 1 - 0.1 $\mu$m of pore size, UF filter has 0.1 - 0.01 $\mu$m of pore size, and NF filter has 0.01 - 0.001 $\mu$m of pore size, which show that the range of physical removal is different. When the 12A is equipped with the MF filter, and the 12B is equipped with the UF filter or NF filter, the purifying vessel is divided into 13A and 13B on the discharge side of filtrate, and whereby processing water different in purifying quality are obtained to be utilized for various purpose, e.x., drinking water and washing water for processing of precise parts, and the like.

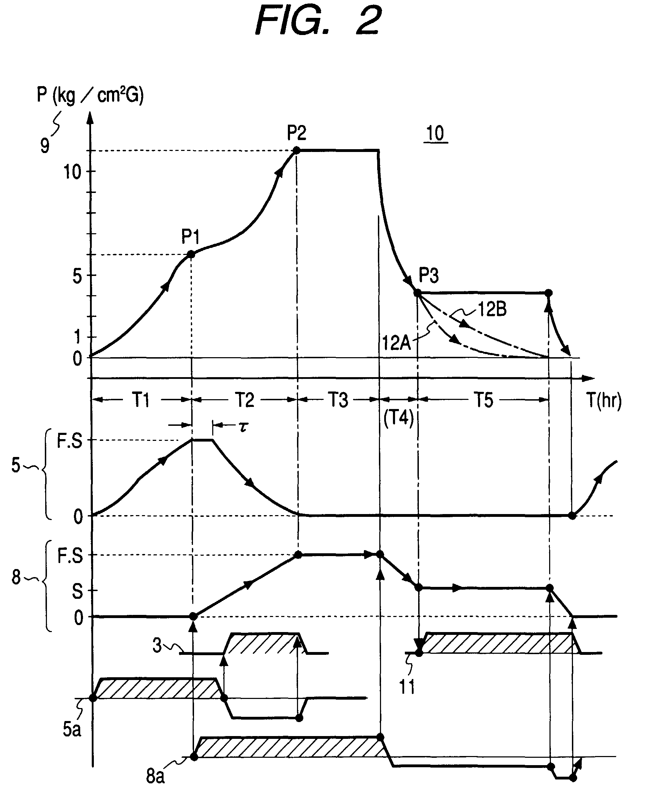

The control method of the control portion 10 by the sequence operation shown in Fig. 2 will be described hereinafter. In Fig. 2, the axis of ordinates indicates pressure P (kg/cm$^2$ · G) and the axis of abscissa indicates time T.

(1) When processing water is filled into the ozone reactor 6 from the processing water vessel 7 through the check valve 4c, the drive valve 5a moves rightward within the ozone gas compressor 5 to pressurize the ozone gas within

EP 0 858 971 A2

the ozone gas compressor having already been supplied, to stroke 0 - F.S (Full Stroke) at time $T_1$ so that internal pressure $P_1$ rises from 1.0 to 6.0 kg/cm$^2$ • G. The internal pressure $P_1$ will be pressure $P = P_1$ in the vessel, since the ozone is injected into the ozone reactor 6 through the check valve 4b shown in Fig. 1. The ozone moves up within the processing water in the ozone reactor 6.

(2) After passage of time for moving up the ozone gas from the bottom onto the water level in the processing water with delay time $\tau$, the control portion 10 causes the inverter board 3 to turn on (operation) to reverse-stroke (F • S→0) the drive valve 5a from right to left so that ozonized gas from an ozone generator 1 is taken into the ozone compressor 5 through the check valve 4a, resulting in $P_1 = 1$ kg/cm$^2$ • G. Then the inverter board 3 is turned off so that a supply of ozonized gas is stopped by the raw gas amount adjusting valve 2. This is the initial state to the state of the above (1), in which state, the ozonized gas can be always supplied into the ozone reactor 6.

(3) At the start of the delay time $\tau$, the control portion 10 causes the drive valve 8a of the processing water pressurizer 8 to move from left to right for pressurizing the gas to stroke 0 - F • S in time $T_2$, and whereby the internal pressure $P_2$ rises from 6 to 11 kg/cm$^2$ • G, resulting in the state of $P = P_2$. The check valves 4b and 4c prevent the pressure from affecting the ozone gas compressor 5 and the processing water vessel 7. This internal pressure $P_2$ is maintained for time $T_3$, and whereby ozone bubbles which move up in the processing water are pressurized ($P_2$) to impart satisfactory oxidization reaction due to Henry law. Therefore, the time needed for forming the processing water into the purifying water, about 10 min. formerly required can be shortened to about 3 min. The shortened time from 10 min to 3 min allows the ozone reaction vessel 6, to that extent, to be miniaturized and the production quantity of purifying water to be increased.

(4) In time $T_4$ after time $T_3$, the control portion 10 causes the drive valve 8a of the processing water pressurizer 8 to move from right to left and to effect reverse stroke (FS→S), resulting in lowering pressure $P_2$ to $P_3$. At pressure $P_2$, FS, the filters 12A, 12B are pressed outside to assume the state where dust stays internally inside the filters. In this state, reducing pressure to $P_3$, S causes the filters 12A, 12B having been pressed outside to be pressed inside for removing the dust stayed inside the filters 12A, 12B.

(5) In time $T_5$, when the electric valve 11 is set from "close" to "open", the processing water is pressurized in the filtration unit 12 to start filtration, discharging the water to the purifying vessel 13. As a result, pressure $P_3$ lowers from 4 to 1 kg/cm$^2$ • G as indicated by one-dot chain line but this is in an exponential function. Then, if the pressure is set to 1 kg/cm$^2$ • G instead of $P=0$ kg/cm$^2$ • G for saving the time required for the filtration process, the drive valve 8a is reverse-stroked (S→0) and reset.

(6) Thereafter, the procedure is returned to the aforementioned (1) and the operation is repeated, and whereby the processing water subjected to "ozonation + filtration" is stored intermittently in the purifying vessel 13.

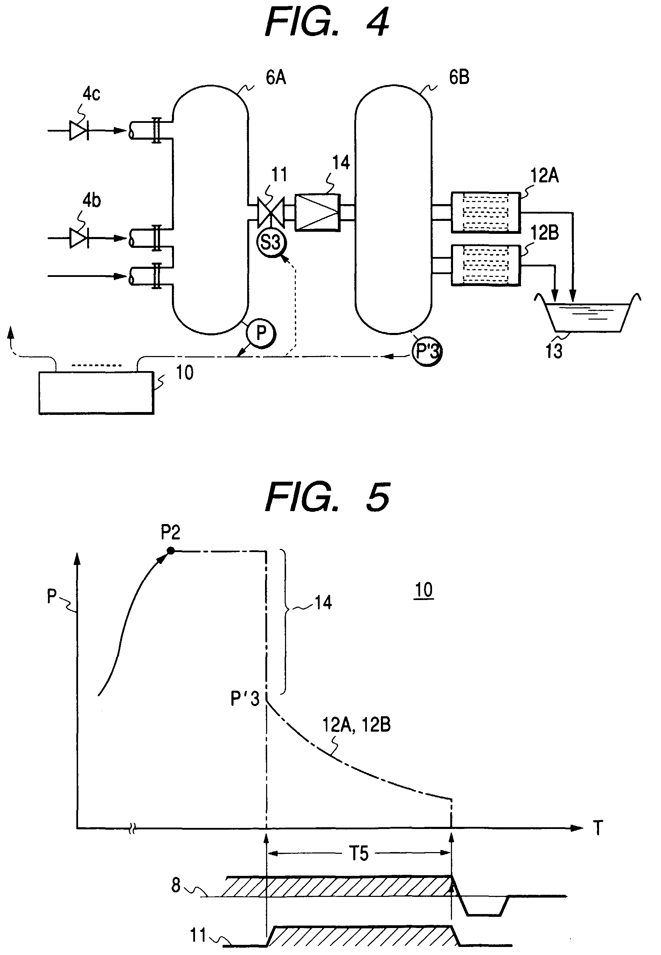

Fig. 4 is an explanatory view of the constitution in which the ozone reaction vessel 6 is divided into at least two sets or more, and $S_3$ of the electric valve 11 and a reducing valve 14 are provided.

Fig. 5 is an explanatory view of a control method time chart of the control portion 10 shown in Fig. 2. That is, when $S_3$ of the electric valve 11 is set from "close" to "open" after pressurization $P_2$, pressure $P_2$ is reduced to $P_3'$ by the reducing valve 14, and the pressure of the ozone reaction vessel 6B is $P_3'$. Immediately, the filters 12A and 12B are pressurized to start filtration, and is discharged into the purifying vessel 13.

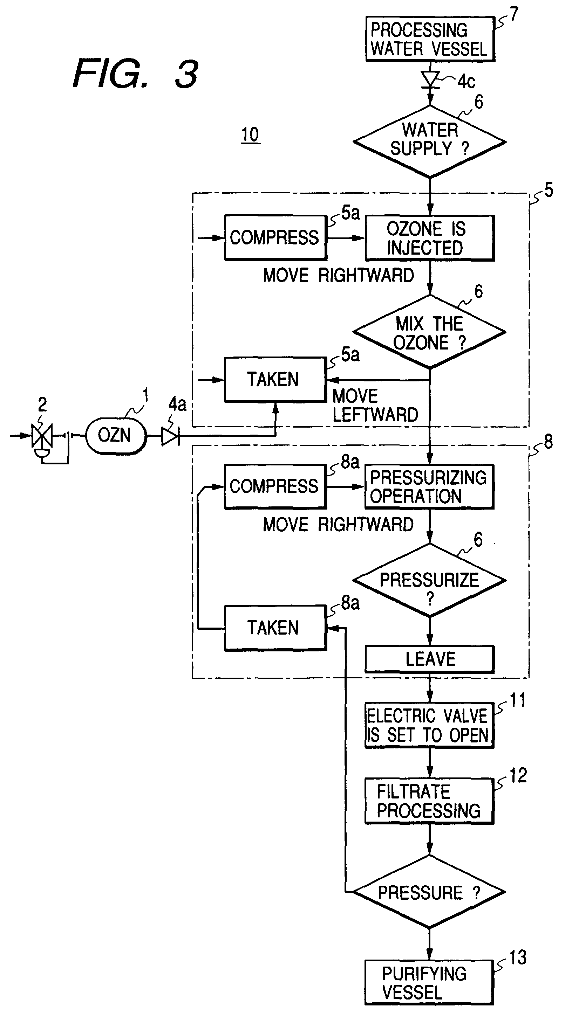

The $P_3'$ lowers as the filtration time $T_5$ passes, and the processing water quantity to be filtrated reduces. In Fig. 4, if the filter unit 12 comprises two sets of 12A and 12B of the same kind (for example, only MF filter) and the water is discharged into the purifying vessel 13, the filtration processing quantity increases. This makes possible the selection between the case of separation of quality of the filtrated processing water as shown in Fig. 1, and the case of increasing the quantity of the filtrated processing water as shown in Fig. 3 can be selected.

In Fig. 2, time $T_4$ may be omitted with pressurized state $P_2 = P_3$. As the effect in this case, there occurs a drawback in that when inlet pressure is too high due to the reproduced reverse washing efficiency of filtration film, the reproduced reverse washing is difficult. However, since the filtration quantity increases in a short period of time, in the use of filter for disposable one, the state of $P_2 = P_3$ can be used to increase the quantity of filtrated processing water.

## Claims

1. An ozone water treatment apparatus for treating processing water with ozone in an ozone reactor (6), comprising:

    a compressor (5) for compressing ozone gas to be supplied to the ozone reactor (6),

4

a processing water vessel (7) for storing processing water to be supplied to the ozone reactor (6), and

a pressurising device (8) for commonly pressurising the water and ozone gas in the ozone reactor (6).

2. An apparatus according to claims 1, wherein the compressor (5) is provided below the ozone reactor (6) and the processing water vessel (7) is provided above the ozone reactor.

3. An ozone water treatment apparatus, comprising:

an ozone reactor (6) having a plurality of connecting holes on its lower end upper sides,

a compressor (5) for compressing ozone gas, connected to a lower connecting hole,

a drain (11, 12, 13),

a processing water vessel (7) for storing processing water, connected to an upper connecting hole, and

a pressurising device (8) for pressurising the processing water and the ozone gas.

4. An ozone water treatment method, comprising the following steps:

supplying processing water from a processing water vessel (7) to an ozone reactor (6),

pressurising ozone gas in a compressor (5),

supplying the pressurised ozone gas to the ozone reactor (6), and

pressurising for a predetermined time with a pressurising device (8) the ozone gas moving up within the ozone reactor (6).

5. An ozone water treatment method, sequentially repeating the following steps:

closing a first valve (4c) after a predetermined quantity of processing water from a processing water vessel (7) has been applied to an ozone reactor (6),

supplying pressurised ozone gas in an ozone compressor (5) into the processing water within the ozone reactor (6) by moving a first drive valve (5a) within the ozone compressor (5),

returning said first drive valve (5a) to its original position and moving a second drive valve (8a) within a pressuriser (8),

applying the pressure generated by the second drive valve (8a) in the pressuriser (8) to the ozone reactor (6),

draining for a predetermined time (T5) treated water obtained by mixing the ozone gas and the processing water, and

opening the first valve (4c) so that a predetermined quantity of processing water from the processing water vessel (7) is supplied to the ozone reactor (6).

6. An apparatus according to any of claims 1 to 3, comprising a controller (10) controlling the apparatus so as to operate in accordance with a method of claim 4 or 5.

7. An apparatus or method according to any of claims 1 to 6, wherein different kinds of filter units (12A, 12B) are provided on a drain side of the ozone reactor (6).

8. An apparatus or method according to any of claims 1 to 7, wherein the pressure of clear water in the ozone reactor is reduced after a predetermined time and the clear water is drained by a filter unit (12A, 12B) provided at a drain side of the ozone reactor (6).

9. An apparatus or method according to any of claims 1 to 8, wherein a reducing valve (14) is provided between two ozone reactors (6A, 6B) and a plurality of filter units (12A, 12B) are provided on the drain side of the downstream one of the ozone reactors.

5

FIG. 1

# FIG. 2

*FIG. 3*

# FIG. 4

# FIG. 5